# EUROPEAN PATENT APPLICATION

(11) **EP 1 862 691 A1**
(43) Date of publication of application: **05.12.2007**
(21) Application number: 07010367.6
(22) Date of filing: 24.05.2007
(51) Int. Cl.: F16D 65/097

(54) **Opposed piston type disc brake**

(30) Priority: 29.05.2006 JP 2006147592
(71) Applicant: AKEBONO BRAKE INDUSTRY CO., LTD., Chuo-ku Tokyo (JP)
(72) Inventor: Kobayashi, Daisuke, Tokyo (JP); Ichige, Takayuki, Tokyo (JP)
(74) Representative: Grünecker, Kinkeldey, Stockmair & Schwanhäusser Anwaltssozietät

(57) **Abstract**

Notches 20, 20 constituting engaging portions are provided at portions of middle portions in a rotating direction a rotor at end portions on outer radial side of the two pads 11, 12 in a radial direction of the rotor. Further, an engaging pin 19 is made to bridge an outer body portion 3b and an inner body portion 4b constituting the caliper 5b. Further, the coupling pin 19 is inserted through the notches 20, 20, so that the two pads 11, 12 are displaceable in an axial direction of the rotor, and a braking torque applied to the two pads 11, 12 can be supported by the coupling pin 19.

## Description

This application claims foreign priority from Japanese Patent Application No. 2006-147592, filed on May 29, 2006, the entire contents of which are hereby incorporated by reference.

### BACKGROUND OF THE INVENTION

### <FIELD OF THE INVENTION>

The present invention relates to an opposed piston type disc brake provided with pistons arranged on both sides of a rotor in a state of being opposed to each other.

### <RELATED ART>

A disc brake is widely used for braking an automobile. In braking by a disc brake, a pair of pads arranged on both sides in an axial direction of a rotor rotated with a wheel are pushed by pistons. In a background art, disc brakes having various structures have been known. In recent years, there is an opposed piston type disc brake provided with pistons on both sides of a rotor in a state of being opposed to each other. In the opposed piston type disc brake, a stable braking force is exerted. In a background art, opposed piston type disc brakes having structures described in, for example, Patent References 1 through 3 have been known.
[Patent Reference 1] JP-A-2004-183904
[Patent Reference 2] JP-A-2005-121174
[Patent Reference 3] JP-T-2005-517877

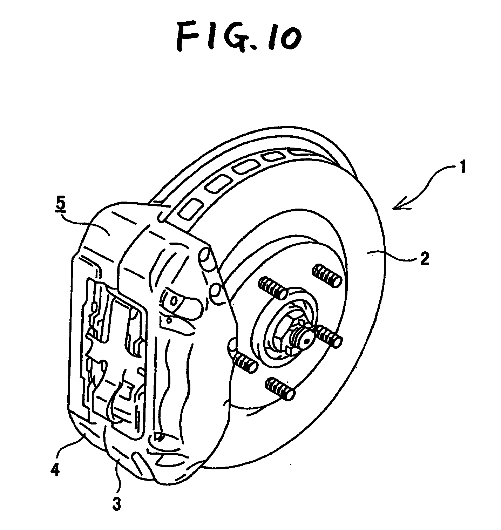

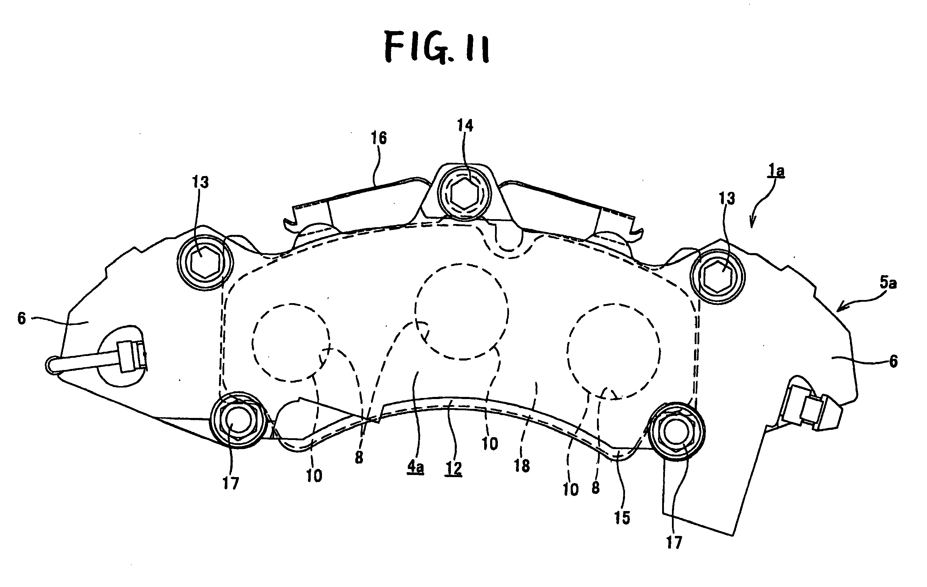

An explanation of a basic structure of an opposed piston type discbrake is given in reference to Fig.10, and an explanation of a specific structure of the opposed piston type disc brake is given in reference to Figs. 11 through 14, based on a description of Patent Reference 2.

As shown by Fig.10, a disc brake 1 of an opposed piston type is provided with a caliper 5 having an outer body portion 3 and an inner body portion 4, in which a rotor 2 rotated along with a wheel is interposed between the outer and inner body portions. Further, an outer cylinder and an inner cylinder are provided at insides of the respective portions 3, 4 in a state of making opening portions of respective thereof opposed to each other by way of the rotor 2. Further, an outer piston and an inner piston are fitted in the outer cylinder and the inner cylinder in liquid tight and displaceably in an axial direction of the rotor 2. Further, the outer body portion 3 supports an outer pad, the inner body portion 4 supports an inner pad, the outer and inner pads are respectively displaceable in the axial direction of the rotor 2. In braking, a pressurized oil is fed to insides of the outer cylinder and the inner cylinder, and the outer pad and the inner pad are pressed to both the inner and the outer side faces of the rotor 2 by the outer piston and the inner piston.

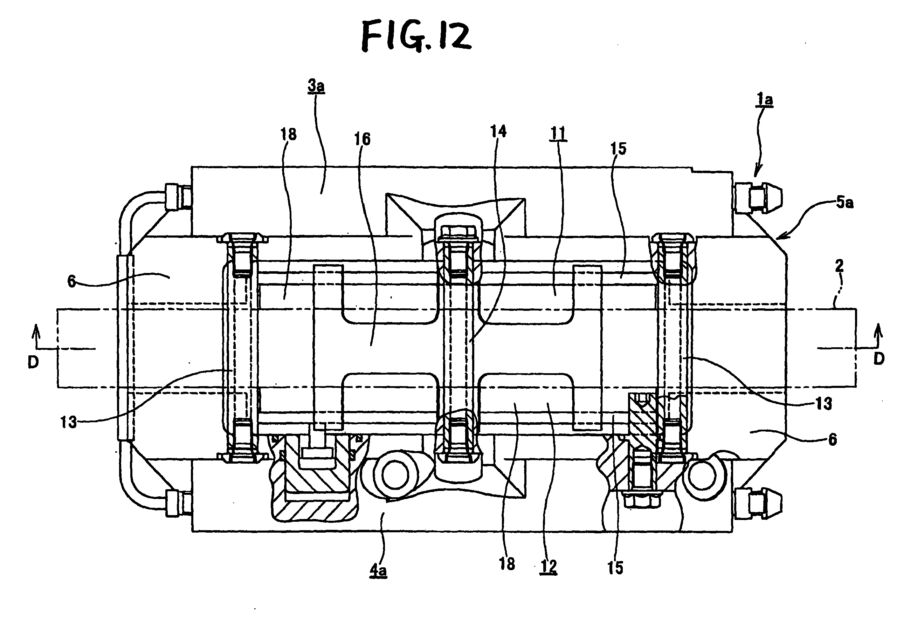

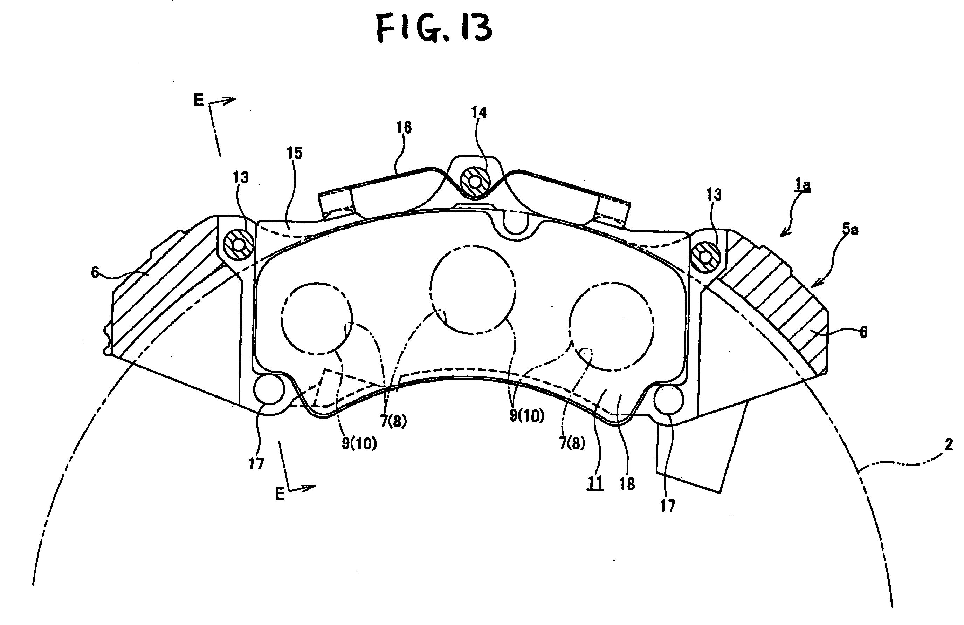

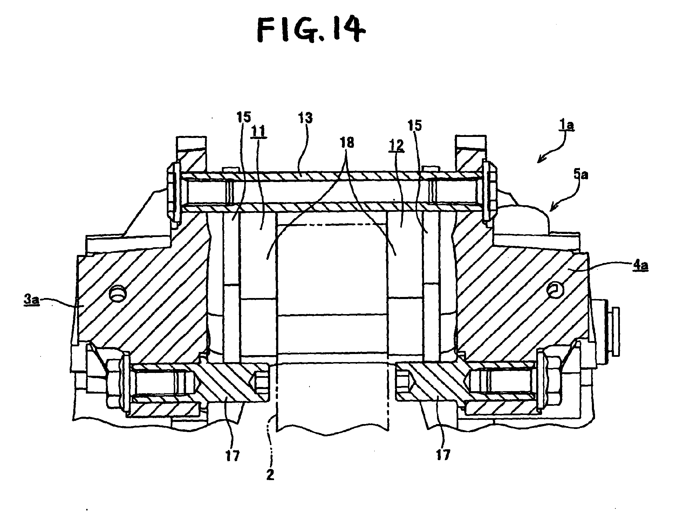

Further, also a further specific disc brake 1a shown in Figs.11 through 14 is provided with a caliper 5a arranged in a state of straddling the rotor 2. The caliper 5a is integrally formed by a material of an aluminum alloy and is provided with an outer body portion 3a and an inner body portion 4a arranged on both sides in an axial direction (head and tail direction of Figs. 11, 13, up and down direction of Fig.12, left and right direction of Fig.14) of the rotor 2, and a pair of connecting portions 6, 6 for connecting both end portions in a peripheral direction (left and right direction of Figs.11 through 13) of the outer and inner body portions 3a, 4a. Further, in a case of an illustrated example, the outer and inner body portions 3a, 4a are respectively provided with 3 pieces of, a total of 6 pieces of outer and inner cylinders 7, 7 (8, 8), and outer and inner pistons 9, 9 (10, 10) are fitted in the respective cylinders 7, 7 (8, 8). Braking is carried out by pressing two outer and inner pads 11, 12 supported by the outer and inner body portions 3a, 4a by interposing the rotor 2 to the rotor 2 by the respective pistons 9, 9 (10, 10).

A pair of outer side coupling pins 13, 13 and one piece of a middle coupling pin 14 are provided between outer end portions in a radial direction of portions of middle portions in peripheral directions of the outer body portion 3a and the inner body portion 4a disposed between the two connecting portions 6, 6 respectively in a state of bridging the two body portions 3a, 4a. In the respective coupling pins 13, 14, the two outer side coupling pins 13, 13 are provided at portions proximate to an outer side in the radial direction of an outer peripheral edge of the rotor 2 at positions of interposing pressure plates 15, 15 of the outer and inner pads 11, 12 from both sides in the peripheral direction. Further, the middle coupling pin 14 is provided at a portion on outer sides in the radial direction of the two pads 11, 12 and between the two outer side coupling pins 13, 13. The respective coupling pins 13, 14 are configured to hamper an interval between the outer body portion 3a and the inner body portion 4a from being deformed in a direction of being expanded by a reaction force during being pressurized for braking.

Further, the two outer side coupling pins 13, 13 are brought into contact with or opposed to be proximate to two end edges in the peripheral direction of the pressure plates 15, 15 constituting the two outer and inner pads 11, 12. In contrast thereto, a pad clip 16 is provided between the middle coupling pin 14 and outer peripherals edges in the radial direction of the pressure plates 15, 15 of the two pads 11, 12 to exert the elastic force directed to inner sides in the radial direction and an elastic force in a direction of separating from each other to the two pressure plates 15, 15.

Further, two pieces of locking pins 17, 17 which are independent for the respective body portions 3a, 4a are provided at the respective body portions 3a, 4a at portions of the outer body portion 3a and the inner body portion 4a proximate to inner sides in the radial direction. The respective locking pins 17, 17 are respectively fixed to inner end portions in the radial direction of the outer and inner body portions 3a, 4a at positions of being proximate to both end portions in the peripheral direction thereof. Under the state, inner end edges in the radial direction of the pressure plates 15, 15 of the two pads 11, 12 are pressed to outer peripheral faces of portions of the respective locking pins 17, 17 based on the elastic force of the pad clip 16. The respective locking pins 17, 17 prevent the two pads 11, 12 from being drawn out from the caliper 5a to an inner side in the radial direction of the rotor 2 and prevent the two pads 11, 12 from being rattled in non braking time.

In braking by the opposed piston type disc brake constituted as described above, the pressurized oil is fed to the respective outer cylinders 7, 7 and the respective inner cylinders 8, 8. Further, the two outer and inner pads 11, 12 are pressed to the two side faces of the rotor 2 by extracting the outer pistons 9, 9 and the inner pistons 10, 10. As a result, braking is carried out by friction between linings 34, 34 constituting the two pads 11, 12 and two side faces of the rotor 2. Further, a braking torque supplied to the two pads 11, 12 based on the friction is supported by the outer side coupling pin 13 on an anchor side of the two outer side coupling pins 13, 13 (a run-out side of rotation of the rotor 2).

In braking carried out as described above, the two body portions 3a, 4a are exerted with forces in directions of being separated from each other as reaction forces in accordance with pressing the two pads 11, 12 to the rotor 2 by the respective pistons 9, 10. The two outer side coupling pins 13, 13 and the middle coupling pin 14 respectively produced by a material having a high Young's ratio are opposed to such a force so as to prevent an interval between the two body portions 3a, 4a from being expanded. Therefore, even when a temperature of the caliper 5a rises by heat generated by friction between linings 18, 18 constituting the two pads 11, 12 and the rotor 2, Young' s modulus of an aluminum alloy constituting the caliper 5a is reduced, and a rigidity of the caliper 5a per se is reduced by that amount, a braking function is not reduced.

In the above-described case of the disc brake 1a of the opposed piston type of the background art shown in Figs.11 through 14, the two outer and inner pads 11, 12 are supported by the two outer and inner body portions 3a, 4a by respective 4 pieces of pins 13, 17. Further, when the middle coupling pin 14 for installing the pad clip 16 is included, respective five pieces of the pins 13, 14, 17 are needed for the respective two outer and inner pads 11, 12. When a necessary number of the respective pins 13, 14, 17 is increased, all of time and labor of fabricating parts, controlling parts, integrating operation thereof and weight are increased. An increase in time and labor of part fabrication, part control, integrating operation thereamong is disadvantageous in view of a reduction in cost. Further, the increase in the weight reduces a so-to-speak unsprung weight, which is disadvantageous in view of achieving to promote a ride quality and a running stability.

### SUMMARY OF THE INVENTION

One or more embodiments of the invention provide an opposed piston type disc brake, in which outer and inner pads are supported by a caliper, a number of pins necessary for supporting a braking torque applied to the pads in braking is reduced, and time and labor of part fabrication, part control, integrating operation, and a weight are reduced.

In a first aspect of the invention, according to one or more embodiments of the invention, an opposed piston type disc brake is provided with a caliper, pluralities of cylinders and pistons, a pair of pad, a coupling pin, and a plurality of holding structure portions.

The caliper is provided with an outer body portion and an inner body portion, in which a rotor rotated along with a wheel is interposed between the outer and inner body portions.

The respective cylinders are provided at the inner and outer body portions to be opposed to each other, the respective pistons are fitted in the respective cylinders in liquid tight and displaceably in an axial direction of the rotor.

The two pads are supported by the respective outer and inner body portions, and the two pads are displaceable in the axial direction of the rotor.

The coupling pin is made to bridge the outer and inner body portions at portions of outer sides in a radial direction more than an outer peripheral edge of the rotor, and the coupling pin is configured to hamper the outer and inner body portions from being displaced in a direction of being separated from each other.

Holding structure portions are provided in a state of being projected from inner side faces of the respective body portions at portions of inner sides in the radial direction more than the outer peripheral edge of the rotor, and the holding structure portion hamper the two pads from deviating to inner sides in the radial direction of the rotor by being engaged with portions of the two pads.

Particularly, in the opposed piston type disc brake, engaging portions are provided at portions of outer radial side end portions of the two pads in the radial direction of the rotor and at middle portions in a rotating direction of the rotor. The coupling pin is inserted into the engaging portions so that the two pads are displaceable in the axial direction of the rotor, and a braking torque applied to the two pads is supported by the coupling pin.

Further, in a second or third aspect of the invention, the engaging portions may be constituted by notches formed at portions of pressure plates constituting the two pads in a state of being opened toward an outer peripheral edge in a radial direction of the rotor.

In the second aspect of the invention, a shape of inner faces of two side faces of the notches provided on both sides in the rotating direction of the rotor may be constituted by planes and the coupling pin may be loosely inserted into the notches.

In the third aspect of the invention, a shape of inner faces of two side faces of the notches provided on both sides in the rotating direction of the rotor may be constituted by recess curve faces in a shape of partially cylindrical faces, and the coupling pin may be loosely inserted through the notches.

Further, in a fourth aspect of the invention, the coupling pin may be arranged in a position displaced to a run-out side of rotation of the rotor from center positions of the pads in the rotating direction of the rotor.

Further, in a fifth aspect of the invention, the plurality of holding structure portions may be engaged with the two pads to be able to support a part of the braking torque applied to the two pads which is not supported by the coupling pin.

Further, in a sixth aspect of the invention, the plurality of holding structure portions may be provided with locking pins projected from the inner side faces of the respective outer and inner body portions at the portions inward from the outer peripheral edge of the rotor in the radial direction.

According to the opposed piston type disc brake of the invention in the first aspect, a number of pins necessary for supporting the outer and inner pads by the caliper and supporting the braking torque applied to the two pads in braking is reduced and all of time and labor of part fabrication, part control, integrating operation and a weight can be reduced.

That is, according to the opposed piston type disc brake of the first aspect, the coupling pin is inserted to the engaging portions provided at portions of the middle portions in the rotating direction of the rotor to be able to support the braking torque applied to the two pads. Therefore, the single piece of the coupling pin can serve to prevent the interval between the two front and inner body portions from being expanded in braking and also serve to support the braking torque in braking. Therefore, the above-described effect can be achieved by making a number of coupling pins provided on an outer side of the outer peripheral edge of the rotor in the radial direction of the rotor small (only one piece). In other words, the pair of outer side coupling pins 13, 13 can be omitted from the background art structure shown in Figs.11 through 14.

When the engaging portions provided at the two pad are constituted by the notches formed at the pressure plates as the second and third aspects for inserting the coupling pin, the engaging portions are facilitated to work. It is necessary to loosely engage the notches and the coupling pin in view of a necessity of being engaged relatively displaceably in the axial direction of the coupling pin inserting to brake and releasing to brake. On the other hand, in braking, it is necessary that inner side faces of the notches and an outer peripheral face of the coupling pin are brought into contact with each other to transmit the braking torque applied to the two pads to the coupling pin. Therefore, it is necessary to pertinently restrict a size of a gap between the inner side face of the notch and the outer peripheral face of the coupling pin.

When the shape of the inner faces of the two side faces of the notches are constituted by planes as the second aspect of the invention, the size of the gap can pertinently be restricted easily.

Further, in the braking, a large force is exerted to contact faces of the inner side face of the notch and the outer peripheral face of the coupling pin based on the braking torque. Therefore, when an area of the contact face is narrow, a large face pressure is operated to the portion (Hertz stress is increased), and there is a possibility of plastically deforming the inner side face or the outer peripheral face. In contrast thereto, when the shape of the inner faces of the two side faces of the notches are constituted by the recess curve faces in the shape of the partially cylindrical faces as the third aspect of the invention, even when the coupling pin having the outer peripheral face constituted by a general cylindrical face is used, the plastic deformation can be prevented by ensuring an area of the contact face.

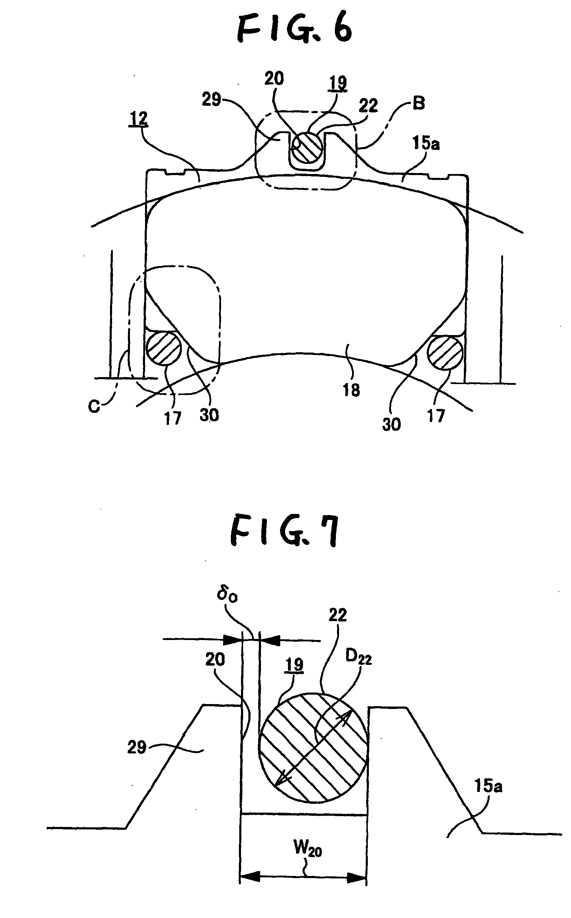

Further, when the coupling pin is provided at the portion proximate to the run-out side of rotation of the rotor (in advancing) as the fourth aspect of the invention, a couple of forces applied to the two pads based on friction between the linings of the two pads and the two side faces of the rotor in braking can be reduced. When the coupling pin is made to be proximate in either direction from a center portion in a circumferential direction, the couple of forces can be reduced by shortening a distance in the radial direction of the rotor (up and down direction of Fig.6 mentioned later) between an input point of the couple of forces (center of friction force present between the lining and the side face of the rotor) and a contact portion of the coupling pin and an engaging portion provided at the side face of the rotor constituting a fulcrum of the couple of forces. Particularly, when the coupling pin is provided to be proximate to the run-out side of rotation, a distance between the coupling pin and the holding structure portion provided on an inner side of rotation (locking pin 17 on right lower side of Fig.6) (particularly, a length of a shift in circumferential direction) can be ensured. Further, when a couple of forces in a direction of directing the inner side of rotation in the radial direction by constituting a center by the coupling pin (clockwise direction of Fig.6) is generated at the two pads by the couple of forces, the couple of forces can efficiently be supported by the holding structure portion provided on the inner side of rotation. By the reason, noise generated in breaking can be restrained by stabilizing attitudes of the two pads in braking.

Further, when a portion of the braking torque applied to two pads is supported by the plurality of holding structure portions as the fifth aspect of the invention, a maximum value of the braking torque supported by the coupling pin in braking can be restrained. Therefore, an outer diameter of the coupling pin can be reduced, and further light-weighted formation is facilitated to achieve as a total of the opposed piston type disc brake.

Further, when the respective holding structure portions are constituted by locking pins as the sixth aspect of the invention, the respective holding structure portions can easily be constituted and low cost formation of the opposed piston type disc brake is easy to achieve.

Other aspects and advantages of the invention will be apparent from the following description and the appended claims.

### BRIEF DESCRIPTION OF THE DRAWINGS

Fig.1 is a perspective view showing an example of an embodiment of the invention.
Fig.2 is a plane view viewed from an outer side in a radial direction of the example.
Fig. 3 is a front view viewed from an outer side constituting a lower side of Fig.2.
Fig.4 is a view viewed from a right side of Fig.3.
Figs.5(A) and 5(B) illustrate end face views and side views showing two examples of a coupling pin.
Fig.6 is a sectional view taken along a line A-A of Fig. 2 omitting a part of thereof.
Fig.7 is a view enlarging a B portion of Fig.6.
Figs.8 (A) to 8 (F) illustrate views similar to Fig. 7 showing six examples of a state of coupling a coupling pin and a notch formed at a pressure plate.
Figs.9(A) to 9(E) illustrate enlarged views in correspondence with a C portion of Fig. 6 showing five examples of a state of engaging a holding structure portion and a pressure plate.
Fig. 10 is a perspective view showing a first example of a disc brake known in a background art.
Fig. 11 is a view similar to Fig. 3 showing a second example of the disc brake known in the background art.
Fig.12 is a view viewed from an outer side in a radial direction constituting an upper side of Fig.11.
Fig.13 is a sectional view taken along a line D-D of Fig.12.
Fig. 14 is a sectional view taken along a line E-E of Fig.13.

### DETAILED DESCRIPTION OF THE EXEMPLARY EMBODIMENTS

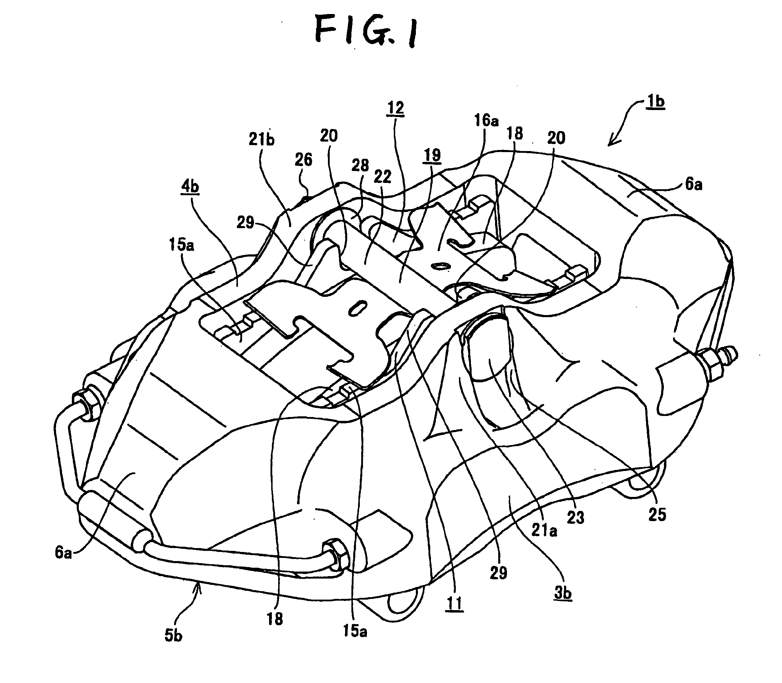

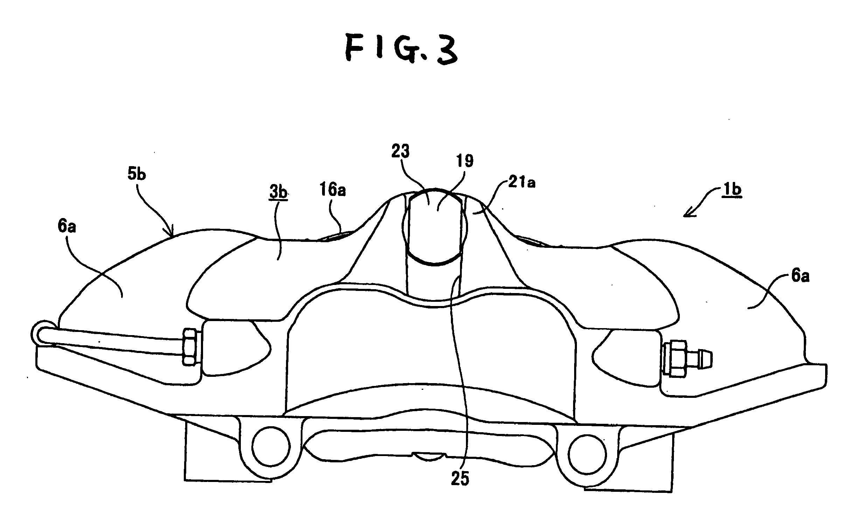

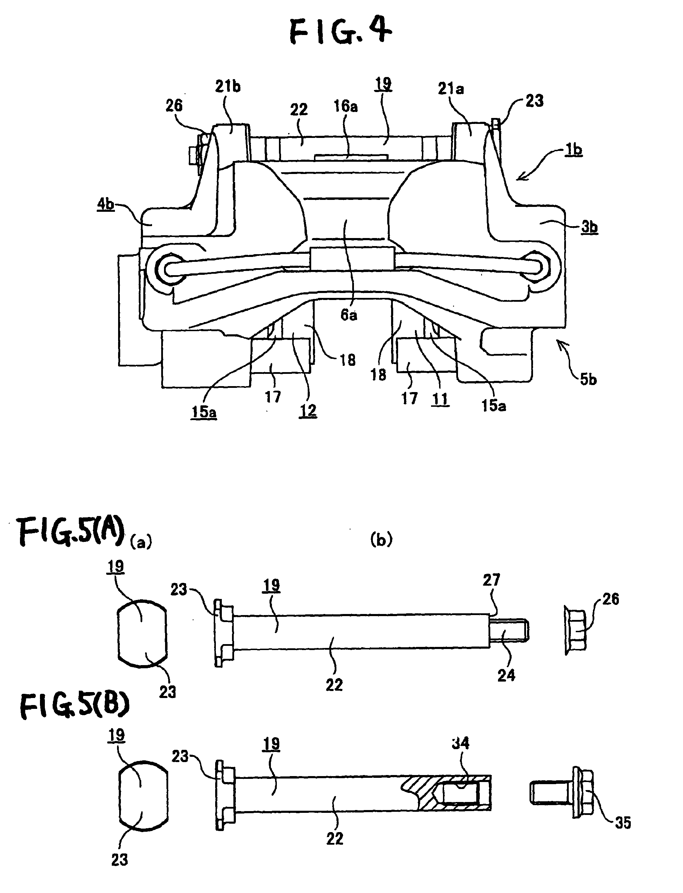

An exemplary embodiment of the invention is explained in referring to Figs.1 through 7. In a disc brake 1b of the exemplary embodiment, a braking torque operated to an outer pad 11 and an inner pad 12 in braking is supported by a single piece of a coupling pin 19 for coupling a middle portion of an outer body portion 3b and a middle portion of an inner body portion 4b in a rotating direction of the rotor 2 on an outer side in the radial direction of an outer peripheral edge of the rotor 2 (refer to Figs.10, 12 through 14). In the disc brake 1b of the exemplary embodiment, the pair of outer side coupling pins 13, 13 which are needed in the background art structure shown in Figs.11 through 14 are omitted by engaging notches 20 formed at pressure plates 15a, 15a constituting the two pads 11, 12 and the coupling pin 19 to be able to transmit the braking torque. The constitution of the background art structure is explained in details in Patent Reference 2. Therefore, an explanation of constituent portions similar to those of the background art structure is omitted or simplified and an explanation will be given centering on the characteristic portion of the example as follows.

A caliper 5b constituting the disc brake 1b of the exemplary embodiment is integrally produced by subjecting an aluminum alloy to diecast forming and includes the outer body portion 3b and the inner body portion 4b and a pair of connecting portions 6a, 6a connecting two end portions of the outer and inner body portions 3b, 4b in the rotating direction of the rotor 2. In order to support and couple the two end portions of the coupling pin 19 by the caliper 5b, projected walls 21a, 21b are projected from outer peripheral faces of middle portions of the outer body portion 3b and the inner body portion 4b in a state of being projected to an outer side in the radial direction of the rotor 2 respectively in parallel with side faces of the rotor 2.

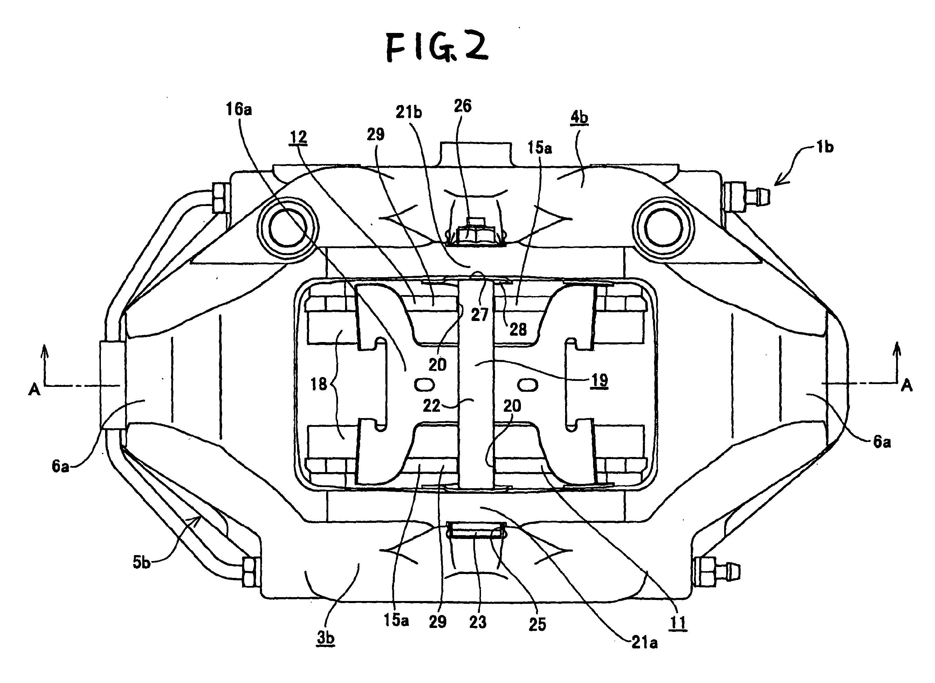

The coupling pin 19 is formed by a shape as shown by Fig. 5 (A) or Fig.5(B) by a metal material having a high Young's modulus (difficult to be deformed elastically and having a high rigidity against a force in a tensile direction) as in a ferrous alloy of stainless steel, bearing steel or the like. The coupling pin 19 shown in Fig.5(A) includes a rod portion 22 having a section in a circular shape, a flange portion 23 in an oval shape of an outward directed flange shape fixedly provided to a base end portion of the rod portion 22, and a male screw portion 24 having a diameter smaller than that of the rod portion 22 formed at a front end portion of the rod portion 22 concentrically with the rod portion 22. Further, the coupling pin 19 shown in Fig.5(B) is formed with a screw hole 34 opened at a center portion of a front end face of the rod portion 22 at a front end portion of the rod portion 22. Further, in the two projected walls 21a, 21b, the projected wall 21a on one side (right this side of Fig.1, lower side of Fig.2) is formed with a through hole in a circular shape and having a comparatively large diameter capable of inserting the rod portion 22 without play. In contrast thereto, at a position at a portion of the projected wall 21b on other side (left depth side of Fig.1, upper side of Fig.2) compatible with the through hole, there is formed a through hole in a circular shape having a comparatively small diameter which can insert the male screw portion 24 and cannot insert the rod portion 22 when the coupling pin 19 shown in Fig.5 (A) is used. On the other hand, when the coupling pin 19 shown in Fig.5 (B) is used, there is formed a through hole capable of inserting the rod portion 22. However, a length of the rod portion 22 is constituted such that a front end portion of the rod portion 22 is present in the through hole. That is, an interval between outer side faces of the two projected walls 21a, 21b is made to be equal to or larger than the length of the rod portion 22. Further, the recess portion 25 is formed in the radial direction of the rotor 2 at a portion of an outer side face of the projected wall 21a on one side including an opening portion of the through hole having the comparatively large diameter.

The coupling pin 19 is integrated to the caliper 5b in a state in which a base end portion of the rod portion 22 is inserted into the through hole of the projected wall 21a on one side, the male screw portion 24 or a front end portion of the rod portion 22 is inserted into the through hole of the projected wall 21b on other side, respectively, and engaging the flange portion 23 to the recess portion 25. Under the state, the coupling pin 19 is made to bridge the two projected walls 21a, 21b in a state of hampering rotation centering on the rod portion 22. Hence, when the coupling pin 19 shown in Fig.5 (A) is used, a nut 26 is screwed to a portion of the male screw portion 24 projected from an outer side face of the projected wall 21b to further fasten. As a result, the projected wall 21b on other side is pinched between the nut 26 and a washer 28 locked by a stepped difference face 27 present at a portion of the coupling pin 19 proximate to a front end of a middle portion thereof. Under the state, the projected walls 21a, 21b are coupled by the coupling pin 19 to prevent the interval between the outer body portion 3b and the inner body portion 4b from being expanded. In contrast thereto, when the coupling pin 19 shown in Fig.5(B) is used, a screw 35 is screwed to the screw hole 34 provided at the front end portion of the rod portion 22 to further fasten. As described above, the front end portion of the rod portion 22 is present at inside of the through hole of the projected wall 21b on other side, and therefore, when the screw 35 is fastened, an inner side face of a head portion of the screw 35 is brought into contact with the outer side face of the projected wall 21b on other side and a surrounding portion of the through hole. Thereby, the two projected walls 21a, 21b can be coupled by the coupling pin 19.

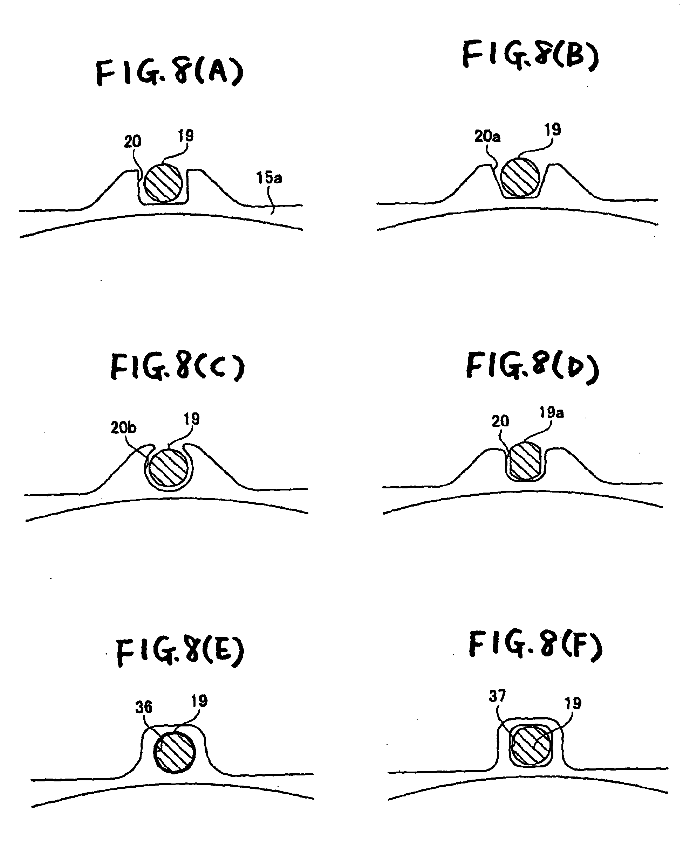

Further, in order to support the braking torque applied to the outer pad 11 and the inner pad 12 in braking by the coupling pin 19, the pressure plates 15a, 15a constituting the two pads 11, 12 are respectively formed with the notches 20. Therefore, middle portions of the two pressure plates 15a, 15a in the rotating direction of the rotor 2 are formed with projected portions 29 projected to an outer side in the radial direction of the rotor 2. Further, the projected portion 29 is formed with the notch 20. As shown by Fig.7, an inner dimension W₂₀ of the notch 20 is slightly larger than an outer diameter D₂₂ of the rod portion 22 of the coupling pin 19 (W₂₀>D₂₂). Therefore, in a non braking state and in a state in which a large force is not exerted to the two pads 11, 12, an inner side face of the notch 20 and an outer peripheral face of the rod portion 22 do not rub each other, and the two pads 11, 12 can be displaced in an axial direction of the rotor 2 by light force. In contrast thereto, when a large force is exerted to the two pads 11, 12 in accordance with braking and respective portions are elastically deformed, the inner side face of the notch 20 and the outer peripheral face of the rod portion 22 are brought into contact with each other to bring about the state of supporting the braking torque applied to the two pads 11, 12 by the coupling pin 19. In the case of the exemplary embodiment, shapes of the coupling pin 19 and the notch 20 and an engaging relationship therebetween are symmetrical in the rotating direction of the rotor 2, and therefore, the braking torque in either cases of advancing and regressing can be supported by the coupling pin 19.

On the other hand, portions of the pressure plates 15a, 15a proximate to both ends in the rotating direction of the rotor 2 and portions in correspondence with inner end portions in the radial direction are constituted by inclined edges 30, 30 in which the more proceeded to the inner side in the radial direction, the more inclined in the direction of being proximate to each other. Further, the two pads 11, 12 are prevented from being drawn out to the inner side in the radial direction by engaging locking pins 17, 17 projected from portions of inner side faces of the outer body portion 3b and the inner body portion 4b proximate to inner ends in the radial direction to inner end portions in the radial direction of the pressure plates 15a, 15a and portions of interposing the respective inclined edges 30, 30 from both sides in the rotating direction of the rotor 2. Further, in the locking pins 17, 17, the locking pin 17 present on the run-out side of rotation (anchor side) in the rotating direction of the rotor 2 is engaged with the inclined edge 30 on the run-out side of rotation in the respective inclined edges 30, 30 to support a portion of the braking torque applied to the two pads 11, 12. Further, although illustration is omitted, in a state of installing the locking pins 17, 17 at predetermined portions of the two outer and inner body portions 3b, 4b, the locking pins 17, 17 are prevented from being drawn out by locking fixing pins of spring pins or the like inserted into through holes provided at portion of the two body portions 3b, 4b by locking holes formed at portions of the locking pins 17, 17 and at positions compatible with the through holes.

According to the disc brake 1b of the opposed piston type of the exemplary embodiment constituted as described above, there can be reduced a number of pins necessary for supporting the two outer and inner pads 11, 12 by the caliper 5b and supporting the braking torque applied to the two pads 11, 12 in braking. That is, the braking torque applied to the two pads 11, 12 is supported by engaging the notches 20 formed at the outer peripheral edges of the pressure plates 15a, 15a constituting the two pads 11, 12 and the coupling pin 19. Therefore, the single piece of the coupling pin 19 can serve to prevent the interval between the two outer and inner body portions 3b, 4b from being expanded in braking and also serve to support the braking torque in braking. Therefore, all of time and labor of part fabrication, part control, integrating operation and the weight can be reduced by reducing the number of coupling pins provided on the outer side of the outer peripheral edge of the rotor 2 in the radial direction of the rotor 2 (constituted by only one piece). In sum, whereas in the case of the background art structure shown in Figs.11 through 14, four pieces of pins are provided for the respective pads, in the case of the structure of the example, by only providing three pieces of the pins 17, 19 for the respective pads 11, 12, the pads 11, 12 can be prevented from being detached and the braking torque can be supported. Further, in the illustrated example, the two pads 11, 12 are prevented from being rattled in non braking time by providing a pad clip 15a between the coupling pin 19 and outer peripheral edges of the pressure plates 15a, 15a of the two outer and inner pads 11, 12.

The structure of embodying the invention is not limited to the structure shown in Figs.1 through 7 but various structures can be adopted within a range of not deviating from the object of reducing time and labor of part fabrication, part control, integrating operation, the weight by reducing a number of coupling pins. With regard to the point, explanations will be given in reference to Figs.8(A) through 9(E).

First, an explanation will be given of a state of engaging the notch and the coupling pin formed on a side of the pressure plate constituting the engaging portion.

In the case of the structure shown in Figs.1 through 7, as shown by Fig.8(A), the shape of the inner faces of the two side faces of the notch 20 is constituted by the plane, and therefore, working for forming the notch 20 and the pressure plate 15a is easy. Further, it is necessary to loosely engage the notch 20 and the coupling pin 19 in view of the necessity of being engaged relatively displaceably in the axial direction of the coupling pin 19 in starting to brake and in releasing to brake. On the other hand, in braking, it is necessary to transmit the braking torque applied to the outer and inner pads 11, 12 to the coupling pin 19 by bringing the inner side face of the notch 20 and the outer peripheral face of the coupling pin 19 into contact with each other. Therefore, it is necessary to pertinently restrict the size of the gap between the inner side face of the notch 20 and the outer peripheral face of the coupling pin 19. When the two side faces of the notch 20 are constituted by planes in parallel with each other as shown by Fig. 8 (A), the size of the gap can easily be restricted pertinently. However, it is not necessarily needed that the two side faces are in parallel with each other. As shown by Fig.8(B), the two inner side faces of the notch 20a can be inclined such that the more proceeding to the outer side in the radial direction of the rotor, the more separated from each other. Further, when the two inner side faces of the notch 20a are inclined in this way, a component of force is generated in a direction of being directed to the inner side in the radial direction at the pad. Therefore, noise can be prevented from being generated by stabilizing an attitude of the pad in braking.

Further, the two side faces may not necessarily be planes. For example, as shown by Fig.8(C), two inner side faces of a notch 20b can be constituted by recess curve faces in shapes of partially cylindrical faces and the coupling pin 19 can loosely be inserted to the notch 20b. When such a constitution is adopted, a damage of plastic deformation or the like can be made to be difficult to be brought about at the inner side face of the notch 20b. Further, in braking, a large force is exerted to the contact faces of the inner side faces of the notch 20b and the outer peripheral face of the coupling pin 19 based on the braking torque. Therefore, when an area of the contact face is narrow, a large face pressure is operated to the portion and there is a possibility of plastically deforming the inner side face or the outer peripheral face. In contrast thereto, as shown by Fig.8(C), when the shapes of the inner faces of the two side faces of the notch 20b are constituted by recess curve faces in the shape of the partially cylindrical face, the plastic deformation can be prevented by ensuring an area of the contact face.

Further, as the structure of preventing the plastic deformation by ensuring the area of the contact face as described above, as shown by Fig.8(D), a combination of the notch 20 constituting the two inner side faces by planes in parallel with each other and a coupling pin 19a having a sectional shape in an oval shape can also be adopted. According to such a structure, the planes of the outer peripheral face of the coupling pin 19a and the inner side faces of the notch 20 are brought into contact with each other, and therefore, the damage of plastic deformation or the like can effectively be prevented from being brought about at the respective faces even when the large braking torque is supported by sufficiently ensuring the contact faces. Further, as the structure in correspondence with an engaging portion described in the scope of Claims, in place of the notch, a circular hole 36 as shown by Fig. 8 (E) can be adopted. By making an inner diameter of the circular hole 36 slightly larger than an outer diameter of the coupling pin 19, in braking, an inner peripheral face of the circular hole 36 and the outer peripheral face of the coupling pin 19 are brought into contact with each other and the braking torque is supported by the coupling pin 19. Also by such a structure, the inner peripheral face of the circular hole 36 can be prevented from being plastically deformed by ensuring the area of the contact face. Further, in place of the circular hole 36, there may be constituted a substantially rectangular hole 37 as shown by Fig.8(F).

Further, when there is a constructed a constitution in which a portion of the braking torque applied to the two pads 11, 12 is supported by a plurality of holding structure portions for hampering the two outer and inner pads 11, 12 from deviating to the inner side in the radial direction such as the locking pin 17, the outer diameter of the coupling pin 19 can be reduced and further light-weighted formation is easy to be achieved as the total of the opposed piston type disc brake.

That is, when the respective holding structure portions are engaged with the two pads 11, 12 to be able to support a portion of the braking torque which cannot be supported by the coupling pin 19, a maximum value of the braking torque supported by the coupling pin 19 in braking can be restrained. Therefore, the outer diameter of the coupling pin 19 can be reduced, as described above, further light-weighted formation is easy to be achieved.

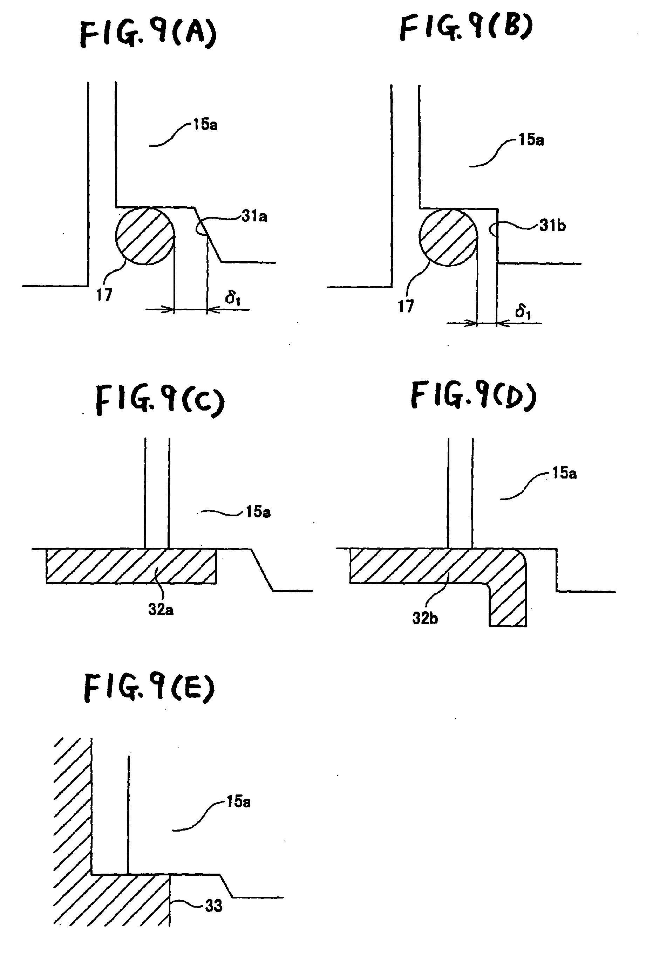

In such a situation, holding structure portions for supporting a portion of the braking torque shown in, for example, Figs.9(A) through 9(E) are conceivable.

In Fig.9(A) and 9(B), notches 31a, 31b formed at corner portions on an inner radial side of the pressure plate 15a and the locking pins 17 are engaged with each other. In either of the cases, in a state of displacing the pressure plate 15a in the rotating direction of the rotor by an amount of δ₁ in accordance with braking, side faces in a circumferential direction of the notches 31a, 31b are brought into contact with outer peripheral faces of the locking pins 17, and the locking pins 17 start supporting the braking torque. Although in non braking time, a gap of the amount of δ₁ is present between the two faces, a dimension δ₁ of the gap is made to be slightly larger than the gap δ₀ between the notch 20 and the coupling pin 19 (refer to Fig.7) (δ₁>δ₀). By the constitution, the braking torque is first supported by the coupling pin 19 and is supported by the locking pin 17 in a state in which the braking torque is increased and cannot be supported by the coupling pin 19.

It is preferable to use the locking pin 17 as the holding structure portion since the respective holding structure portions can easily be constituted and low cost formation of the opposed piston type disc brake is easy to achieve. However, as shown by Figs.9(C) and 9 (D), the holding structure portions can also be constituted by guide plates 32a, 32b fixed to portions of a caliper for guiding the pressure plates 15a constituting the two outer and inner pads 11, 12 by constituting a flat plate shape or an L-like shape in a section thereof. Further, as shown by Fig.9(E), the holding structure portion can also be constituted by a stepped difference face 33 provided integrally with a caliper at a portion of the caliper for guiding the pressure plate 15a.

While the invention has been described with reference to the exemplary embodiment and variations thereof, the technical scope of the invention is not restricted to the description of the exemplary embodiment and variations thereof. It is apparent to the skilled in the art that various changes or improvements can be made. It is apparent from the description of claims that the changed or improved configurations can also be included in the technical scope of the invention.

## Claims

1. An opposed piston type disc brake comprising:
a caliper including an outer body portion and an inner body portion, wherein a rotor is interposed between the outer and inner body portions,
a plurality of cylinders provided to the respective outer and inner body portions;
apluralityof pistons fitted into the respective cylinders;
a pair of pads respectively supported by the outer and inner body portions displaceably in an axial direction of the rotor,
a coupling pin arranged between the outer and inner body portions at portions outward from an outer peripheral edge of the rotor in a radial direction of the rotor, wherein the coupling pin is configured to bridge the outer and inner body portions so as to hamper the outer and inner body portions from being displaced in a direction separating the outer and inner body portions;
a plurality of holding structure portions projected from inner side faces of the respective outer and inner body portions at portions inward from the outer peripheral edge of the rotor in the radial direction, wherein the holding structure is configured to be engaged with portions of the pair pads and to hamper the pair of pads from deviating to an inner side in the radial direction; and
engaging portions provided at outer radial side end portions of the respective pads in the radial direction and middle portions of the respective pads in a rotating direction of the rotor, wherein the coupling pin is inserted into the engaging portions, the respective pads are displaceable in the axial direction of the rotor relative to the coupling pin, and a braking torque applied to the pads is supported by the coupling pin.

2. The opposed piston type disc brake according to Claim 1, wherein the engaging portions are notches formed at portions of pressure plates of the pads,
the notches are opened toward outer peripheral edges of the pads in the radial direction,
inner faces of two side faces of the respective notches on both sides in the rotating direction of the rotor have plane shapes, and
the coupling pin is loosely inserted into the notches.

3. The opposed piston type disc brake according to Claim 1, wherein the engaging portions are notches formed at portions of pressure plates of the pads,
the notches are opened toward outer peripheral edges of the pads in the radial direction,
inner faces of two side faces of the respective notches on both sides in the rotating direction of the rotor have recess curve faces configured by partially cylindrical faces, and
the coupling pin is loosely inserted into the notches.

4. The opposed piston type disc brake according to Claim 1, wherein the coupling pin is arranged in a position displaced to a run-out side of rotation of the rotor from center positions of the pads in the rotating direction of the rotor.

5. The opposed piston type disc brake according to Claim 1, wherein the plurality of holding structure portions are configured to be engaged with the pads and to support a part of the braking torque applied to the pads which is not supported by the coupling pin.

6. The opposed piston type disc brake according to Claim 1, wherein the plurality of holding structure portions comprise lockingpins projected from the inner side faces of the respective outer and inner body portions at the portions inward from the outer peripheral edge of the rotor in the radial direction.
